# EUROPEAN PATENT APPLICATION

(11) **EP 4 835 637 A1**
(43) Date of publication of application: **04.11.2026**
(21) Application number: 25749147.2
(22) Date of filing: 23.01.2025
(51) Int. Cl.: G06F 3/04845, G06T 11/60, G06F 3/04842, G06F 3/041, G06F 3/04883

(54) **ELECTRONIC DEVICE AND IMAGE EDITING METHOD**

(30) Priority: 30.01.2024 KR 20240013635; 15.03.2024 KR 20240036316
(71) Applicant: Samsung Electronics Co., Ltd., Suwon-si, Gyeonggi-do 16677 (KR)
(72) Inventor: MUN, Jihun, Suwon-si, Gyeonggi-do 16677 (KR); KIM, Moonsoo, Suwon-si, Gyeonggi-do 16677 (KR); NAM, Sungguk, Suwon-si, Gyeonggi-do 16677 (KR); YANG, Chulju, Suwon-si, Gyeonggi-do 16677 (KR); YOO, Nagyeom, Suwon-si, Gyeonggi-do 16677 (KR)
(74) Representative: Nederlandsch Octrooibureau
(86) International application number: PCT/KR2025/001272
(87) International publication number: WO 2025/165060

(57) **Abstract**

An electronic device, according to one embodiment of the present disclosure, comprises: a display; a memory for storing instructions; and a processor. The instructions, when executed by the processor, may instruct the electronic device to: display, through the display, an image including at least one object; generate skeleton information at least partially on the basis of determining that the at least one object corresponds to a deformable object; display, through the display, a graphical object, corresponding to the skeleton information, on the at least one object in the image; at least partially on the basis of a first user input, display, through the display, the graphical object which has been modified so that at least a portion of the graphical object is changed; generate a prompt on the basis of the modified graphical object and at least a portion of the image; and generate an artificial intelligence (AI) image based on the prompt by using an AI model.

## Description

### [Technical Field]

The disclosure relates to an electronic device and an image editing method.

### [Background Art]

Various electronic devices, such as a smartphone, a tablet PC, a portable multimedia player (PMP), a personal digital assistant (PDA), a laptop personal computer, a wrist watch, and a wearable device (e.g., a head-mounted display (HMD)), include a camera and may capture images using the camera. There are user demands for facilitating the editing of captured images.

### [Disclosure of Invention]

### [Technical Problem]

An electronic device according to an embodiment of the disclosure may include a display.

An electronic device according to an embodiment of the disclosure may include a memory configured to store instructions.

An electronic device according to an embodiment of the disclosure may include a processor.

The instructions according to an embodiment of the disclosure, when executed by the processor, may cause the electronic device to display an image including at least one object through the display.

The instructions according to an embodiment of the disclosure, when executed by the processor, may cause the electronic device to generate skeleton information at least partially based on a determination that the at least one object corresponds to a deformable object.

The instructions according to an embodiment of the disclosure, when executed by the processor, may cause the electronic device to display, through the display, a graphical object corresponding to the skeleton information in the at least one object on the image.

The instructions according to an embodiment of the disclosure, when executed by the processor, may cause the electronic device to, at least partially based on a first user input, display a graphical object modified such that at least a part of the graphical object is changed, through the display.

The instructions according to an embodiment of the disclosure, when executed by the processor, may cause the electronic device to generate a prompt, based on the modified graphical object and at least a part of the image.

The instructions according to an embodiment of the disclosure, when executed by the processor, may cause the electronic device to generate an artificial intelligence (AI) image based on the prompt by using an artificial intelligence model.

A method for editing an image by an electronic device according to an embodiment of the disclosure may include an operation of displaying an image including at least one object through a display.

A method for editing an image by an electronic device according to an embodiment of the disclosure may include an operation of generating skeleton information at least partially based on a determination that the at least one object corresponds to a deformable object.

A method for editing an image by an electronic device according to an embodiment of the disclosure may include an operation of displaying, through the display, a graphical object corresponding to the skeleton information in the at least one object on the image.

A method for editing an image by an electronic device according to an embodiment of the disclosure may include an operation of, at least partially based on a first user input, displaying a graphical object modified such that at least a part of the graphical object is changed, through the display.

A method for editing an image by an electronic device according to an embodiment of the disclosure may include an operation of generating a prompt, based on the modified graphical object and at least a part of the image.

A method for editing an image by an electronic device according to an embodiment of the disclosure may include an operation of generating an artificial intelligence (AI) image based on the prompt by using an artificial intelligence model.

### [Brief Description of Drawings]

With regard to the description of the drawings, the same or like reference signa may be used to designate the same or like elements.
FIG. 1 is a block diagram of an exemplary electronic device capable of performing operations described in the disclosure.
FIG. 2 is a block diagram illustrating an integrated intelligence system according to an embodiment.
FIG. 3 is a block diagram illustrating an electronic device according to an embodiment of the disclosure.
FIG. 4 is a flowchart illustrating an image editing method of an electronic device according to an embodiment of the disclosure.
FIG. 5 is a diagram illustrating an image editing method of an electronic device according to an embodiment of the disclosure.
FIG. 6 is a diagram illustrating an image editing method of an electronic device according to an embodiment of the disclosure.
FIG. 7A and FIG. 7B are diagrams illustrating an image editing method of an electronic device according to an embodiment of the disclosure.
FIG. 8 is a diagram illustrating an image editing method of an electronic device according to an embodiment of the disclosure.
FIG. 9 is a diagram illustrating an image editing method of an electronic device according to an embodiment of the disclosure.

### [Mode for the Invention]

There has been a difficulty in freely and diversely deforming the type of an object on an image.

An electronic device and an image editing method according to the disclosure may move an object, based on depth information on an image, thereby acquiring an image in which the position of the object is edited naturally.

An electronic device and an image editing method by the electronic device according to the disclosure may may automatically generate skeleton information corresponding to an object or generate the same according to a user input such that, when performing image editing, the user may freely and variously deform the type of an object on an image.

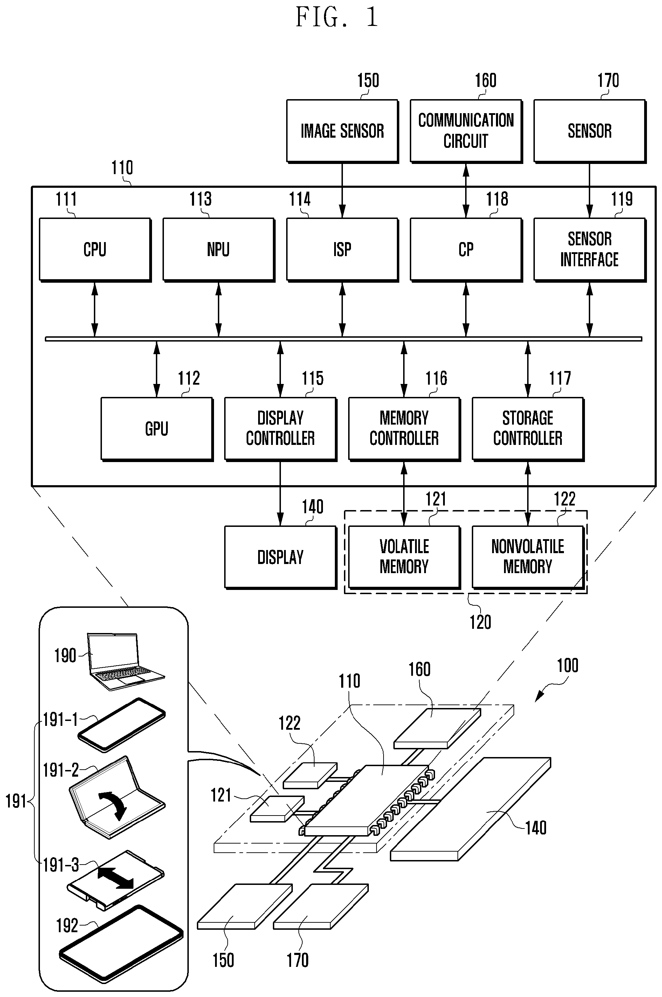

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example. For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122.
The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semi-permanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

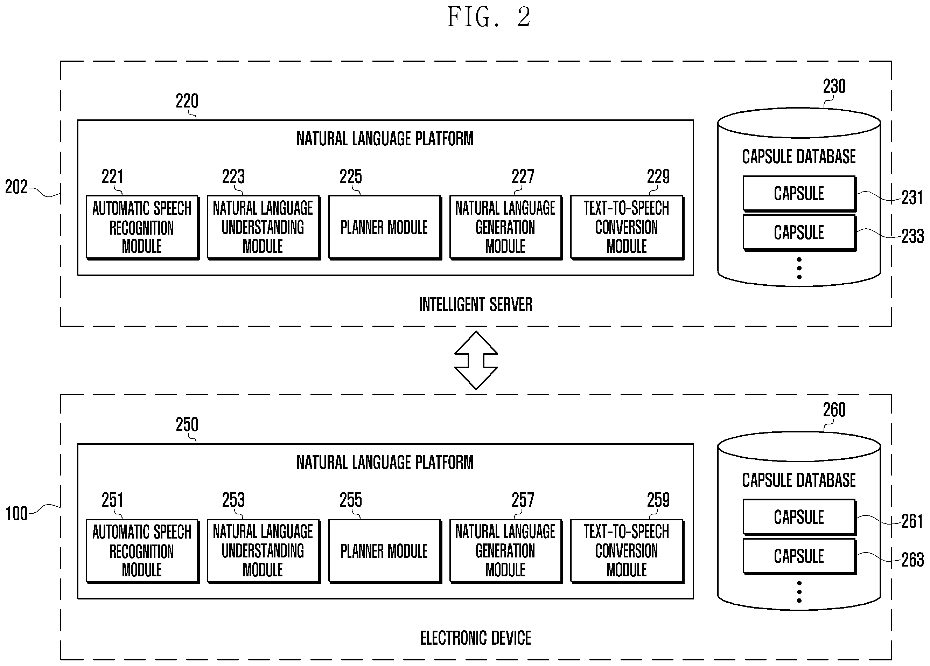

FIG. 2 is a block diagram illustrating an integrated intelligence system according to an embodiment.

Referring to FIG. 2, the integrated intelligent system may include an electronic device 203 (e.g., a user terminal) and an intelligent server 202. The electronic device 203 and the intelligent server 202 may be connected to each other through a network to transmit/receive data. According to an embodiment, the integrated intelligence system may be configured as a single device (e.g., an electronic device 203 or an intelligent server 202). According to an embodiment, the intelligent server 202 may include the entire configuration of the intelligent server 200 illustrated in FIG. 2 or at least a part of the configuration. For example, the intelligent server 202 may execute one or more programs including a natural language platform 220 of the intelligent server 200 in FIG. 2 and/or may store a capsule database 230. The configuration of the intelligent server 202 is not limited to that illustrated in FIG. 2. For example, at least some components of the natural language platform 220 (e.g., the automatic speech recognition module 221, the natural language understanding module 223, the planner module 225, the natural language generation module 227, and/or the text-to-speech conversion module 229) may be omitted from the intelligent server 202. For example, the intelligent server 202 may further include some components of the intelligent server 200 illustrated in FIG. 2 (e.g., the front end 210, the execution engine 240, and/or the end user interface 250).

The electronic device 203 may execute one or more programs including a natural language platform 250 and/or may store a capsule database 260. For example, the electronic device 203 may include the components of the electronic device 201 in FIG. 2 and may further execute one or more programs including a natural language platform 250 and/or may further store a capsule database 260. For example, the first electronic device 201 may include the components of the first electronic device 201 in FIG. 2 and may further execute one or more programs including a natural language platform 250 and/or may further store a capsule database 260.

The natural language platform 250 may include an automatic speech recognition module 251, a natural language understanding module 253, a planner module 255, a natural language generation module 257, and/or a text-to-speech conversion module 259. The automatic speech recognition module 251, the natural language understanding module 253, the planner module 255, the natural language generation module 257, and the text-to-speech conversion module 259 may perform identical or similar functions as the automatic speech recognition module 221, the natural language understanding module 223, the planner module 225, the natural language generation module 227, and the text-to-speech conversion module 229 in FIG. 2, respectively.

The capsule database 260 may perform identical or similar functions as the capsule database 230 of the intelligent server 200 or 202. The capsule database 260 may store information regarding the relationship of multiple operations and multiple concepts included in a plan generated by the planner module 255. For example, the capsule database 260 may store at least one capsule (for example, capsule 261 and/or capsule 263).

According to an embodiment, the electronic device 203 (for example, the natural language platform 250 and/or the capsule database 260) and the intelligent server 202 (for example, the natural language platform 220 and/or the capsule database 230) may perform at least one function (or operation) in association with each other, or may perform at least one function (or operation) independently of each other. For example, the electronic device 203 may not transmit the received speech input of the user to the intelligent server 202, and may perform speech recognition by itself. In an embodiment, the electronic device 203 may convert the received speech input to text data through the automatic speech recognition module 251. The electronic device 203 may transmit the converted text data to the intelligent server 202. The intelligent server 202 may determine (or identify) the user's intent and/or parameters from the text data through the natural language understanding module 223. The intelligent server 202 may generate a plan through the planner module 225, based on the determined intent and parameters, and transmit the same to the electronic device 203, or may transmit the determined intent and parameters to the electronic device 203 such that a plan is generated through the planner module 255 of the electronic device 203. The planner module 255 of the electronic device 203 may generate at least one plan for performing a task corresponding to the speech input by using information stored in the capsule database 260.

In an embodiment, the electronic device 203 may convert the received speech input into text data through the automatic speech recognition module 251, and determine (or identify) the user's intent and/or parameters, based on the text data, through the natural language understanding module 253. The electronic device 203 may generate a plan through the planner module 255, based on the determined intent and parameters, or may transmit the determined intent and parameters to the intelligent server 202 such that a plan is generated through the planner module 225 of the intelligent server 202. For example, in case that the electronic device 203 does not include the planner module 255 and/or the capsule database 260, the electronic device 203 may generate a plan through the intelligent server 202.

In an embodiment, the electronic device 203 may detect an utterance pattern which is difficult to learn in the automatic speech recognition module 251 or the natural language understanding module 253, and transmit a speech input corresponding to the detected utterance pattern to the intelligent server 202 such that the automatic speech recognition module 221 or the natural language understanding module 223 of the intelligent server 202 processes the same.

The embodiments of the disclosure are not limited to the above-described examples. For example, the electronic device 203 may process the received speech input only inside the terminal such that the result corresponding to the speech input is obtained. In an embodiment, the electronic device 203 and the intelligent server 202 may not only divide the speech input into modules and process the same, but may also process corresponding modules under cooperation. For example, the natural language understanding module 253 of the electronic device 203 and the natural language understanding module 223 of the intelligent server 202 may operate together to obtain one result (e.g., the user's intent and/or parameters).

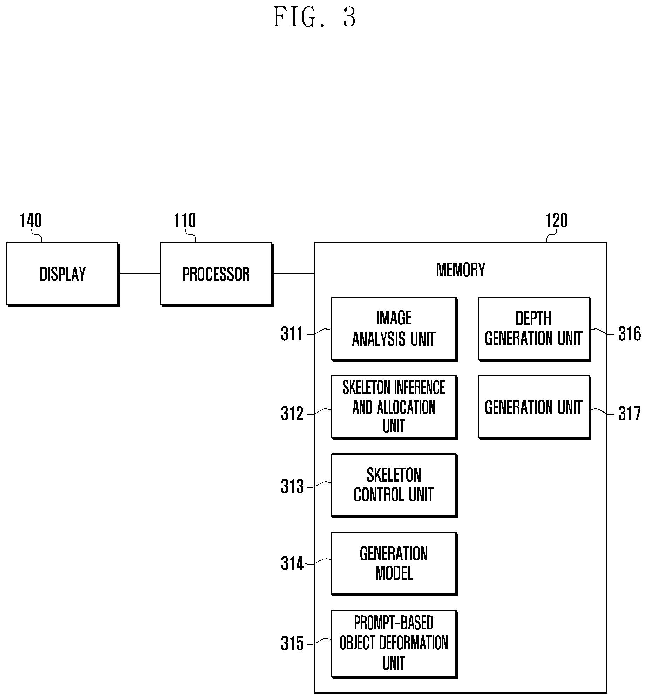

FIG. 3 is a block diagram illustrating an electronic device 100 according to an embodiment of the disclosure.

In an embodiment, the electronic device 100 may include a processor 110, a memory 120, and a display 140.

In an embodiment, the memory 120 may include an image analysis unit 311, a skeleton inference and allocation unit 312, a skeleton control unit 313, a generation model 314, a prompt-based object deformation model 315, a depth generation unit 316, and a re-lighting unit 317. The memory 120 may store an image analysis unit 311, a skeleton inference and allocation unit 312, a skeleton control unit 313, a generation model 314, a prompt-based object deformation model 315, a depth generation unit 316, and a re-lighting unit 317.

In an embodiment, instructions, a program, or an application may include an image analysis unit 311, a skeleton inference and allocation unit 312, a skeleton control unit 313, a generation model 314, a prompt-based object deformation model 315, a depth generation unit 316, and a re-lighting unit 317. Instructions, a program, or an application may include an image analysis unit 311, a skeleton inference and allocation unit 312, a skeleton control unit 313, a generation model 314, a prompt-based object deformation model 315, a depth generation unit 316, and a re-lighting unit 317.

However, this is not limitative, and the image analysis unit 311, the skeleton inference and allocation unit 312, the skeleton control unit 313, the generation model 314, the prompt-based object deformation model 315, the depth generation unit 316, and the re-lighting unit 317 may be embedded in the processor 110 as instructions.

In an embodiment, the image analysis unit 311 may include generative artificial intelligence (AI). The skeleton inference and allocation unit 312 may include generative AI. The skeleton control unit 313 may include generative AI. The generation model 314 may include generative AI. The prompt-based object deformation model 315 may include generative AI. The depth generation unit 316 may include generative AI. The re-lighting unit 317 may include generative AI.

In an embodiment, the instructions stored in the image analysis unit 311, when executed by the processor 110, may cause the electronic device 100 to identify object information in an image.

In an embodiment, the instructions stored in the image analysis unit 311, when executed by the processor 110, may cause the electronic device 100 to identify a deformable object and/or an interactive object on an image.

In an embodiment, the instructions stored in the image analysis unit 311, when executed by the processor 110, may cause the electronic device 100 to identify a deformable object and/or an interactive object on an image and to identify object information.

In an embodiment, the instructions stored in the image analysis unit 311, when executed by the processor 110, may cause the electronic device 100 to perform segmentation in an image.

In an embodiment, the instructions stored in the image analysis unit 311, when executed by the processor 110, may cause the electronic device 100 to detect and classify objects in an image through segmentation.

In an embodiment, the instructions stored in the image analysis unit 311, when executed by the processor 110, may cause the electronic device 100 to identify a deformable object and/or an interactive object among at least one object detected in an image.

In an embodiment, the instructions stored in the image analysis unit 311, when executed by the processor 110, may cause the electronic device 100 to perform learning for identifying a deformable object and/or an interactive object through scene analysis.

In an embodiment, the instructions stored in the image analysis unit 311, when executed by the processor 110, may cause the electronic device 100 to identify a place and/or a terrain included in an image.

In an embodiment, the deformable object may include, for example, at least one from among an object having a movable position on an image, an object having a changeable size, an object having a changeable type, and an object having a deformable joint.

In an embodiment, the deformable object may include, for example, an object such as a living entity such as an animal or a plant. However, this is not limitative, and the instructions stored in the image analysis unit 311, when executed by the processor 110, may cause the electronic device 100 to identify a terrain, a place, or a background on an image through scene analysis. The instructions stored in the image analysis unit 311, when executed by the processor 110, may cause the electronic device 100 to recognize an object disposed on a terrain, a place (e.g., a building), or a background as a deformable object.

In an embodiment, the interactive object may include an object capable of interacting with a deformable object. The interactive object may include a deformable object.

In an embodiment, the interactive object may include an object that is subject to a state change when the state of a deformable object is changed. For example, in case that the deformable object is a person, the person may be changed from a standing state to a state sitting on a chair. The chair is an object subject to a state change and may be an interactive object.

In an embodiment, the instructions stored in the image analysis unit 311, when executed by the processor 110, may cause the electronic device 100 to first identify a deformable object and then identify other objects as interactive objects.

In an embodiment, the instructions stored in the skeleton inference and allocation unit 312, when executed by the processor 110, may cause the electronic device 100 to generate skeleton information, based on identified object information.

In an embodiment, the instructions stored in the skeleton inference and allocation unit 312, when executed by the processor 110, may cause the electronic device 100 to generate skeleton information as coordinate or location information. The skeleton information may include coordinate or location information. The instructions stored in the skeleton inference and allocation unit 312, when executed by the processor 110, may cause the electronic device 100 to store skeleton information as metadata in the memory 120.

In an embodiment, the instructions stored in the skeleton inference and allocation unit 312, when executed by the processor 110, may cause the electronic device 100 to allocate generated skeleton information to an object.

In an embodiment, the instructions stored in the skeleton inference and allocation unit 312, when executed by the processor 110, may cause the electronic device 100 to generate skeleton information regarding a deformable object and to allocate the generated skeleton information to the deformable object.

In an embodiment, the instructions stored in the skeleton inference and allocation unit 312, when executed by the processor 110, may cause the electronic device 100 to generate skeleton information, by applying a skeleton inference algorithm, from a deformable object.

In an embodiment, the instructions stored in the skeleton inference and allocation unit 312, when executed by the processor 110, may cause the electronic device 100 to receive a user input regarding a deformable object and to generate skeleton information. For example, the user input may include a drawing input. The instructions stored in the memory 120, when executed by the processor 110, may cause the electronic device 100 to display a user interface such that a drawing input may be received.

In an embodiment, the instructions stored in the skeleton control unit 313, when executed by the processor 110, may cause the electronic device 100 to provide a user interface such that a skeleton may be controlled, based on skeleton information.

In an embodiment, the skeleton information may include a graphical object.

In an embodiment, a graphical object may be displayed on the display 140. Upon receiving a user input, the instructions stored in the memory 120, when executed by the processor 110, may cause the electronic device 100 to move a link interface and/or a joint interface included in the graphical object. For example, the user input may include a drag input. The instructions stored in the memory 120, when executed by the processor 110, may cause the electronic device 100 to display the link interface and/or the joint interface moved according to the user input on the display 140. The instructions stored in the memory 120, when executed by the processor 110, may cause the electronic device 100 to display a graphical object corresponding to depth information of an object corresponding to a skeleton, based on depth information of an image.

In an embodiment, the graphical object may be displayed on the display 140. Upon receiving a user input, the instructions stored in the memory 120, when executed by the processor 110, may cause the electronic device 100 to change the angle between link interfaces.

In an embodiment, the graphical object may be displayed on the display 140. Upon receiving a user input, the instructions stored in the memory 120, when executed by the processor 110, may cause the electronic device 100 to change the length of a link interface (e.g., make a link longer or shorter than the original link).

For example, in case that the deformable object is a television, the instructions stored in the memory 120 when executed by the processor 110, may cause the electronic device 100 to display a link interface surrounding the television as a graphical object. If the length of the link interface is increased or decreased, the size of the television which is a deformable object may be changed.

In an embodiment, the graphical object may be displayed on the display 140. Upon receiving a user input, the instructions stored in the memory 120, when executed by the processor 110, may cause the electronic device 100 to move an object (e.g., a changeable object or an interactive object) included in a graphical object or an image.

In an embodiment, in case that an object (e.g., a changeable object or an interactive object) included in a graphical object or an image is moved, the instructions stored in the memory 120, when executed by the processor 110, may cause the electronic device 100 to determine whether the same is paired with the surrounding terrain or place and may correct the object (e.g., a changeable object or an interactive object) included in the image such that the same is paired.

In an embodiment, in case that an object (e.g., a changeable object or an interactive object) included in a graphical object or an image is moved, the instructions stored in the memory 120, when executed by the processor 110, may cause the electronic device 100 to perform scene analysis, determine whether objects interact with each other based on the scene analysis, and correct the object (e.g., a changeable object or an interactive object) included in the image such that objects interact with each other.

In an embodiment, in case that an object (e.g., a changeable object or an interactive object) included in a graphical object or an image is moved, the instructions stored in the memory 120, when executed by the processor 110, may cause the electronic device 100 to perform scene analysis, determine whether objects are paired, based on the scene analysis, and correct the object (e.g., a changeable object or an interactive object) included in the image such that objects are paired.

In an embodiment, in case that an object (e.g., a changeable object or an interactive object) included in a graphical object or an image is moved, the instructions stored in the memory 120, when executed by the processor 110, may cause the electronic device 100 to determine whether objects are paired, and correct the object included in the image (e.g., a changeable object or an interactive object) such that objects are paired.

In an embodiment, in case that an object (e.g., a changeable object or an interactive object) included in an image is a chair, and in case that the chair is moved by a user input and is thus spaced apart from the floor, the instructions stored in the memory 120, when executed by the processor 110, may cause the electronic device 100 to increase the length of the chair (correct the length of the chair such that the chair reaches the floor) such that the same is paired with the floor.

In an embodiment, in case that an object (e.g., a changeable object or an interactive object) included in an image is a chair, and in case that the chair is moved by a user input and is thus spaced apart from the floor, the instructions stored in the memory 120, when executed by the processor 110, may cause the electronic device 100 to increase the length of the chair (correct the length of the chair such that the chair reaches the floor) such that the same interacts with the floor.

In an embodiment, the graphical object may include at least one link interface or multiple link interfaces. The graphical object may include at least one joint interface that connects link interfaces.

However, this is not limitative, and the graphical object may include a joint interface based on a deformable object.

In an embodiment, the generation model 314 may generate an image including an object corresponding to a graphical object.

In an embodiment, the instructions stored in the generation model 314, when executed by the processor 110, may cause the electronic device 100 to change an object on an image, based on a graphical object.

In an embodiment, the instructions stored in the generation model 314, when executed by the processor 110, may cause the electronic device 100 to generate an image including a changed object, based on a graphical object.

However, this is not limitative, and the instructions stored in the generation model 314, when executed by the processor 110, may cause the electronic device 100 to generate an image including an object that has interacted with a changed object, based on a graphical object.

However, this is not limitative, and the instructions stored in the generation model 314, when executed by the processor 110, may cause the electronic device 100 to generate an image in which the shape between objects (e.g., a person and a person) is changed by using a deformed object changed based on a graphical object. For example, an image may be generated to be changed from a state in which people (deformable objects) are standing to a state in which they are hugging each other.

In an embodiment, the instructions stored in the generation model 314, when executed by the processor 110, may cause the electronic device 100 to generate an image by replicating a changeable object or an interactive object.

In an embodiment, the instructions stored in the generation model 314, when executed by the processor 110, may cause the electronic device 100 to change an object corresponding to a graphical object changed according to a user input, and generate an image including the changed object.

In an embodiment, the instructions stored in the prompt-based object deformation model 315, when executed by the processor 110, may cause the electronic device 100 to correct a graphical object and/or an image generated through the generation model 314 by using a prompt. The prompt may include, for example, a question or a command that induces a specific task to be performed.

In an embodiment, the instructions stored in the prompt-based object deformation model 315, when executed by the processor 110, may cause the electronic device 100 to correct an image so as correspond to the user's intent, based on a graphical object and/or an image generated through the generation model 314 and a prompt, such that a result in which an object is deformed as intended by the user is generated. The intent may include a purpose or direction that the user intends to achieve through the image and/or prompt.

In an embodiment, the instructions stored in the prompt-based object deformation model 315, when executed by the processor 110, may cause the electronic device 100 to correct a graphical object and/or a generated image through the generation model 314, based on a prompt describing a behavior or demeanor that an object included in an image may take.

In an embodiment, the prompt-based object deformation model 315 may correct an image to correspond to the user's intent, based on a graphical object and/or a generated image and the prompt, through the generation model 314 such that a result in which an object is deformed as intended by the user is generated.

In an embodiment, the prompt-based object deformation model 315 may correct a graphical object and/or a generated image through the generation model 314 by using a prompt.

In an embodiment, the prompt-based object deformation model 315 may correct a graphical object and/or a generated image through the generation model 314, based on a prompt describing a behavior or demeanor that an object included in an image may take.

In an embodiment, the prompt may be acquired through a prompt input interface.

In an embodiment, the instructions stored in the prompt-based object deformation model 315, when executed by the processor 110, may cause the electronic device 100 to acquire a prompt through a prompt input interface.

In an embodiment, the prompt may include a sentence-type structure composed of natural language. The prompt may include an image input, a text input, or a speech input.

In an embodiment, the instructions stored in the prompt-based object deformation model 315, when executed by the processor 110, may cause the electronic device 100 to extract a prompt from a sentence composed of natural language.

In an embodiment, the instructions stored in the depth information generation module 316, when executed by the processor 110, may cause the electronic device 100 to generate a depth map with respect to an image to be edited. The depth information generation module 316 may include not only generative AI but also general AI. The depth map may include information related to the distance from the view point to the surface of an object included in an image. The depth information generation module 316 may be artificial intelligence trained to calculate depth information from a single image.

In an embodiment, the depth information may include information acquired by using a sensor (e.g., a lidar or a time of flight (ToF)) for acquiring depth information during image capture. The depth information may be stored in metadata within the image.

In an embodiment, the instructions stored in the depth information generation module 316, when executed by the processor 110, may cause the electronic device 100 to update depth information of an image, based on a result in which an object in the image is changed and/or moved.

In an embodiment, the instructions stored in the re-lighting unit 317, when executed by the processor 110, may cause the electronic device 100 to, if an object is changed or moved on an image by a user input, adjust the light and/or shadow corresponding to the moved object.

In an embodiment, the instructions stored in the re-lighting unit 317, when executed by the processor 110, may cause the electronic device 100 to repeatedly adjust the light and/or shadow in response to the changed or moved object.

In an embodiment, the instructions stored in the re-lighting unit 317, when executed by the processor 110, may cause the electronic device 100 to display an image in which the light and/or a shadow has been adjusted in response to the changed or moved object, as a preview.

In an embodiment, the instructions stored in the re-lighting unit 317, when executed by the processor 110, may cause the electronic device 100 to perform an operation of adjusting the light and/or shadow in a background image, based on the moved object position and depth information updated according to a change in the object.

In an embodiment, the memory 120 may further include an out-painting/in-painting unit (not illustrated).

In an embodiment, the instructions stored in the out-painting/in-painting unit, when executed by the processor 110, may cause the electronic device 100 to identify a first region on an image which is emptied by a change in the position of a movable object identified in an image and/or a second region of an object to be generated according to a change in the position of a movable object identified in an image.

In an embodiment, the instructions stored in the out-painting/in-painting unit, when executed by the processor 110, may cause the electronic device 100 to perform a filling operation, based on an object and/or a pixel recognized or detected on an image, with regard to the first and second regions. The filling operation may include an operation of adding a recognized or detected object and/or pixel to the region to be filled.

In an embodiment, the instructions stored in the out-painting/in-painting unit, when executed by the processor 110, may cause the electronic device 100 to determine that a part of a movable object has moved out of the image boundary line. The instructions stored in the out-painting/in-painting unit, when executed by the processor 110, may cause the electronic device 100 to perform an operation of displaying the full shape of a movable object if a part of the movable object is moved out of the image boundary line. In an embodiment, the instructions stored in the out-painting/in-painting unit, when executed by the processor 110, may cause the electronic device 100 to analyze a region in which the original image needs to be expanded such that the entire shape of a moved object is displayed with reference to the image original size (e.g., resolution), and perform out-painting in region determined to be expanded.

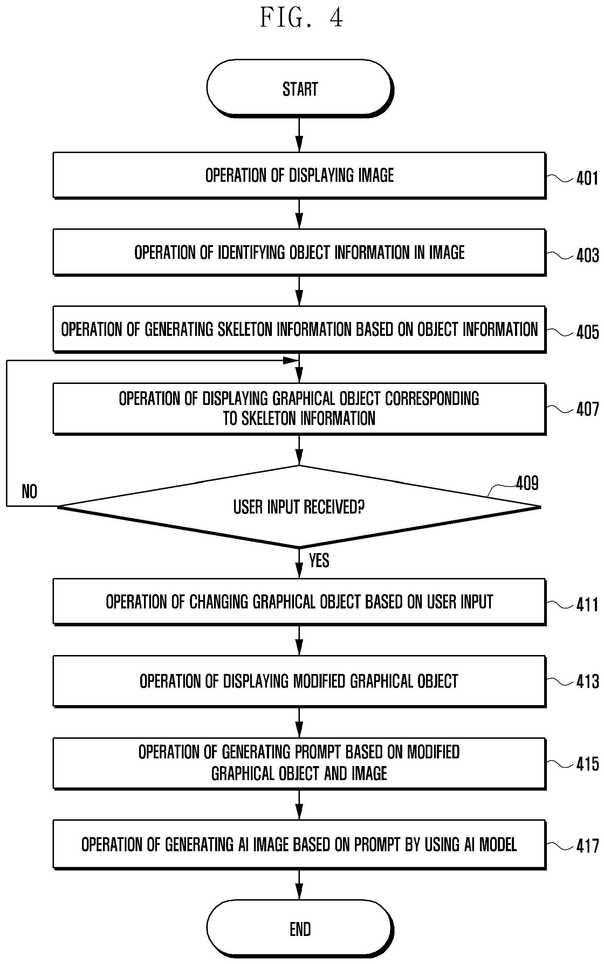

FIG. 4 is a flowchart illustrating an image editing method of an electronic device 100 according to an embodiment of the disclosure.

In an embodiment, the memory 120 may store instructions. The instructions stored in the memory 120 may cause the electronic device 100 to perform the image editing method in FIG. 4.

In an embodiment, in operation 401, the instructions stored in the memory 120 may cause the electronic device 100 to display an image on the display 140. The image may include at least one object.

In an embodiment, in operation 401, the instructions stored in the memory 120 may cause the electronic device 100 to display an image including at least one object through the display 140.

For example, the image may include an image stored in the image gallery by the user. The image may be acquired through the image sensor 150 included in the electronic device 100. The image may be acquired through the communication circuit 160 included in the electronic device 100.

In an embodiment, in operation 401, the instructions stored in the memory 120 may cause the electronic device 100 to display an image on the display 140 through an image editing interface. The image editing interface may receive a touch input from the user, change an object included in the image, skeleton information corresponding to the object, or a graphical object corresponding to the object, and display the same on the display 140.

In an embodiment, in operation 403, the instructions stored in the memory 120 may cause the electronic device 100 to identify object information in the image.

In an embodiment, in operation 403, the instructions stored in the memory 120 may cause the electronic device 100 to identify a deformable object and/or an interactive object on the image and identify object information.

In an embodiment, in operation 403, the instructions stored in the memory 120 may cause the electronic device 100 to perform segmentation in the image.

In an embodiment, in operation 403, the instructions stored in the memory 120 may cause the electronic device 100 to recognize and classify objects through segmentation in the image.

In an embodiment, in operation 403, the instructions stored in the memory 120 may cause the electronic device 100 to identify a deformable object and/or an interactive object among at least one object detected in the image.

In an embodiment, in operation 403, the instructions stored in the memory 120 may cause the electronic device 100 to perform learning to identify a deformable object and/or an interactive object through scene analysis.

In an embodiment, in operation 403, the instructions stored in the memory 120 may cause the electronic device 100 to identify a place and/or a terrain included in the image.

In an embodiment, in operation 403, the instructions stored in the memory 120 may cause the electronic device 100 to first identify a deformable object and identify other objects as interactive objects.

In an embodiment, in operation 405, the instructions stored in the memory 120 may cause the electronic device 100 to generate skeleton information, based on object information.

In an embodiment, in operation 405, the instructions stored in the memory 120 may cause the electronic device 100 to generate skeleton information, based on identified object information.

In an embodiment, in operation 405, the instructions stored in the memory 120 may cause the electronic device 100 to generate skeleton information regarding a deformable object and allocate the generated skeleton information to the deformable object.

In an embodiment, in operation 405, the instructions stored in the memory 120 may cause the electronic device 100 to generate skeleton information, by applying a skeleton inference algorithm, from a deformable object.

In an embodiment, in operation 405, the instructions stored in the memory 120 may cause the electronic device 100 to generate skeleton information by receiving a user input regarding a deformable object.

In an embodiment, in operation 405, the instructions stored in the memory 120 may cause the electronic device 100 to display a user interface such that a drawing input may be received. The instructions stored in the memory 120 may cause the electronic device 100 to generate skeleton information by receiving a drawing input.

In an embodiment, operations 403 and 405 may be merged. In an embodiment, in operation 405, the instructions stored in the memory 120 may cause the electronic device 100 to generate skeleton information based on object information, at least partially based on the determination that at least one object corresponds to a deformable object.

In an embodiment, in operation 407, the instructions stored in the memory 120 may cause the electronic device 100 to display a graphical object corresponding to skeleton information through the display 140.

In an embodiment, in operation 407, the instructions stored in the memory 120 may cause the electronic device 100 to display a graphical object corresponding to skeleton information as an overlay on at least one object.

In an embodiment, in operation 407, the instructions stored in the memory 120 may cause the electronic device 100 to provide a user interface such that a skeleton may be controlled, based on skeleton information.

In an embodiment, the skeleton information may include a graphical object.

In an embodiment, the graphical object may be displayed on the display 140. Upon receiving a user input, the instructions stored in the memory 120, when executed by the processor 110, may cause the electronic device 100 to move a link interface and/or a joint interface included in the graphical object. For example, the user input may include a drag input. The instructions stored in the memory 120, when executed by the processor 110, may cause the electronic device 100 to display the link interface and/or the joint interface, which have been moved according to the user input, on the display 140.

In an embodiment, the graphical object may include at least one link interface or multiple link interfaces. The graphical object may include at least one joint interface that connects link interfaces.

However, this is not limitative, and the graphical object may include a hinge interface based on a deformable object.

In an embodiment, in operation 409, the instructions stored in the memory 120 may cause the electronic device 100 to determine whether a user input has been received.

Upon receiving a user input, the instructions stored in the memory 120 may cause the electronic device 100 to proceed from operation 409 to operation 411.

Upon receiving no user input, the instructions stored in the memory 120 may cause the electronic device 100 to proceed from operation 409 to operation 407.

In an embodiment, in operation 411, the instructions stored in the memory 120 may cause the electronic device 100 to modify a graphical object, based on a user input.

In an embodiment, in operation 413, the instructions stored in the memory 120 may cause the electronic device 100 to display the modified graphical object through the display 140.

In an embodiment, in operation 413, the instructions stored in the memory 120 may cause the electronic device 100 to display an object changed based on the modified graphical object.

In an embodiment, in operation 413, the instructions stored in the memory 120 may cause the electronic device 100 to change an object on an image, based on a graphical object.

In an embodiment, in operation 413, the instructions stored in the memory 120 may cause the electronic device 100 to generate an image including an object changed based on a graphical object.

In an embodiment, in operation 415, the instructions stored in the memory 120 may cause the electronic device 100 to generate a prompt, based on the modified graphical object and image.

In an embodiment, in operation 415, the instructions stored in the memory 120 may cause the electronic device 100 to extract a prompt related to the modified graphical object or the changed object.

In an embodiment, in operation 415, the instructions stored in the memory 120 may cause the electronic device 100 to extract a prompt describing a behavior or demeanor that an object included in an image may take.

In an embodiment, in operation 415, the instructions stored in the memory 120 may cause the electronic device 100 to obtain a prompt through a prompt input interface.

In an embodiment, the prompt may include a sentence-type structure composed of natural language. The prompt may include an image input, a text input, or a speech input.

In an embodiment, in operation 415, instructions stored in the memory 120 may cause the electronic device 100 to extract a prompt from a sentence composed of natural language.

In an embodiment, in operation 417, the instructions stored in the memory 120 may cause the electronic device 100 to generate an image, based on a prompt and a changed object.

In an embodiment, in operation 417, the instructions stored in the memory 120 may cause the electronic device 100 to generate an AI image based on a prompt using an AI model. The AI model may include at least one of an image analysis unit 311, a skeleton inference and allocation unit 312, a skeleton control unit 313, a generation model 314, a prompt-based object deformation unit 315, a depth generation unit 316, or a re-lighting unit 317, for example.

In an embodiment, in operation 417, the instructions stored in the memory 120 may cause the electronic device 100 to correct a graphical object and/or an image generated through the generation model 314 by using a prompt.

In an embodiment, in operation 417, the instructions stored in the memory 120 may cause the electronic device 100 to correct an image so as correspond to the user's intent, based on a graphical object and/or an image generated through the generation model 314 and a prompt, such that a result in which an object is deformed as intended by the user is generated.

In an embodiment, in operation 417, the instructions stored in the memory 120 may cause the electronic device 100 to correct a graphical object and/or a generated image through the generation model 314, based on a prompt describing a behavior or demeanor that an object included in an image may take.

In an embodiment, when generating an image based on a prompt and a changed object, in operation 417, the instructions stored in the memory 120 may cause the electronic device 100 to change depth information regarding the changed object.

In an embodiment, when generating an image based on a prompt and a changed object, in operation 417, the instructions stored in the memory 120 may cause the electronic device 100 to perform re-lighting with regard to the changed object.

In an embodiment, when generating an image based on a prompt and a changed object, in operation 417, the instructions stored in the memory 120 may cause the electronic device 100 to perform an out-painting/in-painting operation with regard to the changed object.

However, this is not limitative, and in the image editing method of the electronic device 100 in FIG. 4, operations 415 and 417 may be omitted.

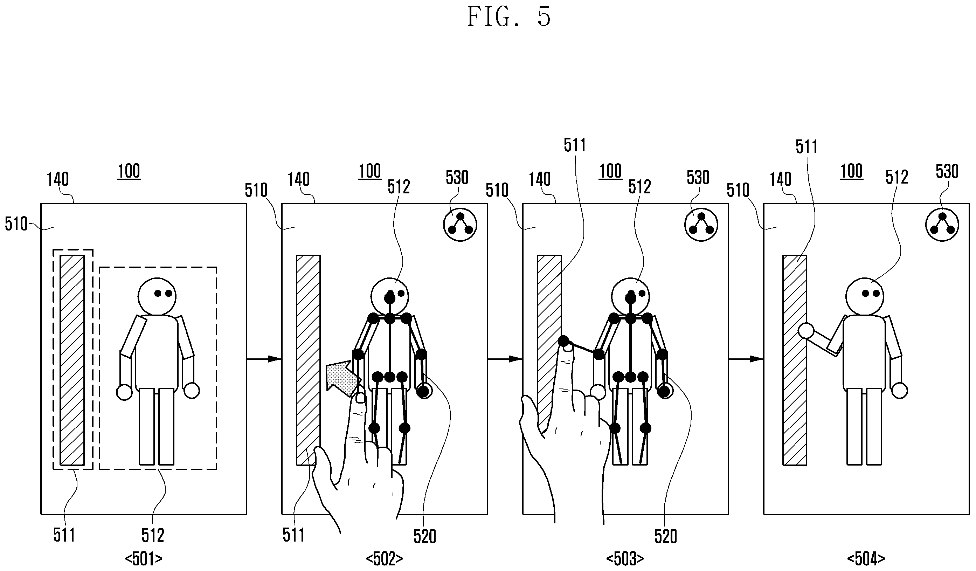

FIG. 5 is a diagram illustrating an image editing method of an electronic device 100 according to an embodiment of the disclosure.

On the screen 501, the instructions stored in the memory 120 may cause the electronic device 100 to display a first image 510 on the display 140. The first image 510 may be displayed on an image editing interface.

For example, the first image 510 may include at least one object 511 and 512. The first image 510 may include a wall 511 and a person 512 as objects.

On the screen 501, the instructions stored in the memory 120 may cause the electronic device 100 to recognize and classify at least one object 511 and 512 through segmentation in the first image 510.

On the screen 501, the instructions stored in the memory 120 may cause the electronic device 100 to identify a deformable object 512 and an interactive object 511 from among at least one object 511 and 512 detected in the first image 510.

For example, the deformable object (e.g., a person 512) may include at least one of a movable object, an object having a changeable size, an object having a deformable joint, or an object having a deformable joint, on the first image 510.

For example, the interactive object (e.g., a wall 511) may include an object capable of interacting with a deformable object (e.g., a person 512). The interactive object (e.g., wall 511) may include a deformable object. The interactive object (for example, a wall 511) may include an object that is the target of a state change when the state of the deformable object is changed. For example, if the deformable object is a person 512, the person 512 may be changed from a standing state to a state in which he/she leans against the wall 511. The subject of the state change may be the person 512, and the target of the state change may be the wall 511. The deformable object (e.g., a person 512) may include the subject of the state change, and the interactive object (e.g., a wall 511) may include the target of the state change.

On the screen 502, the instructions stored in the memory 120 may cause the electronic device 100 to display a graphical object 520 as an overlay on a deformable object (e.g., person 512) on the display 140.

On the screen 502, the instructions stored in the memory 120 may cause the electronic device 100 to automatically display a graphical object 520 as an overlay, upon identifying a deformable object (e.g., a person 512), on the display 140.

However, this is not limitative, and on the screen 502, the instructions stored in the memory 120 may cause the electronic device 100 to display a graphical object display icon 530 on the display 140. Upon receiving a user input on the graphical object display icon 530, the instructions stored in the memory 120 may cause the electronic device 100 to display the graphical object 520 as an overlay on the deformable object (e.g., a person 512) on the display 140.

On the screen 502, the instructions stored in the memory 120 may cause the electronic device 100 to display no graphical object 520 upon receiving a user input regarding the graphical object display icon 530 while displaying the graphical object 520 as an overlay on the deformable object (e.g., a person 512).

On the screen 502, the instructions stored in the memory 120 may cause the electronic device 100 to infer skeleton information regarding a deformable object (e.g., a person 512) and display a notification on the graphical object display icon 530 to indicate that the inference has been completed. For example, the notification indicating that the inference has been completed may include an operation of highlighting the graphical object display icon 530. The instructions stored in the memory 120 may cause the electronic device 100 to display a graphical object 520 as an overlay on a deformable object (e.g., a person 512), based on the inferred skeleton information.

On the screen 503, the instructions stored in the memory 120 may cause the electronic device 100 to receive a user input regarding the graphical object 520.

On the screen 503, the instructions stored in the memory 120 may cause the electronic device 100 to change the shape of the graphical object 520 in accordance with a user input.

On the screen 503, the instructions stored in the memory 120 may cause the electronic device 100 to move a link interface and/or a joint interface included in the graphical object 520. For example, the user input may include a drag input. The instructions stored in the memory 120, when executed by the processor 110, may cause the electronic device 100 to display the link interface and/or the joint interface moved according to the user input on the display 140. The instructions stored in the memory 120, when executed by the processor 110, enable the electronic device 100 to display the graphical object change process (e.g., a change in position) in real time on the screen while changing the graphical object.

On the screen 503, the instructions stored in the memory 120 may cause the electronic device 100 to provide a user interface for controlling a variable position such that, in consideration of the characteristics of the current object (e.g., person 512), the same can move only within a movable region.

On the screen 503, the instructions stored in the memory 120 may cause the electronic device 100 to move change the position of a deformable object (e.g., a person 512) on an image such that, even if a graphical object 520 moves without full contact with an interactive object (e.g., a wall 511), the deformable object (e.g., a person 512) and the interactive object (e.g., a wall 511) are paired or make contact with each other. The pairing operation may include, for example, performing an interaction between objects.

On the screen 503, the instructions stored in the memory 120 may cause the electronic device 100 to change the position of a deformable object (e.g., a person 512) on an image such that, even if a graphical object 520 moves without full contact with an interactive object (e.g., a wall 511), the deformable object (e.g., a person 512) and the interactive object (e.g., a wall 511) interact or contact each other.

For example, position of the person 512 may be changed on the image such that, even if the hand-shaped link interface of the graphical object 520 does not fully contact the wall 511, the person 512 and the wall 511 are paired or contact each other.

For example, position of the person 512 may be changed on the image such that, even if the hand-shaped link interface of the graphical object 520 does not fully contact the wall 511, the person 512 and the wall 511 interact or contact each other.

On the screen 504, the instructions stored in the memory 120 may cause the electronic device 100 to generate an image including an object (e.g., a person 512) changed based on the movement of the graphical object 520.

In an embodiment, skeleton information (or location or coordinate information) of the changed object (e.g., person 512) may be stored in the memory 120 as meta information.

On the screen 504, the instructions stored in the memory 120 may cause the electronic device 100 to extract a prompt and generate an image including an object (e.g., a person 512) changed based on the extracted prompt and/or the movement of the graphical object 520.

For example, in case that the graphical object 520 has moved without full contact with an interactive object (e.g., a wall 511), an image may be generated to show an object (e.g., a person 512) changed based on the extracted prompt and/or the movement of the graphical object 520 touching the wall 511 with a hand. The user may input "Please generate an image of a person leaning against a wall" to the prompt. The instructions stored in the memory 120 may cause the electronic device 100 to extract a prompt and generate an image showing an object (e.g., a person 512) changed based on the extracted prompt and/or the movement of the graphical object 520 touching the wall 511 with a hand.

On the screen 504, the instructions stored in the memory 120 may cause the electronic device 100 to display a graphical object display icon 530 on a generated image or the first image 510 having a changed object, on the display 140. Upon receiving a user input on the graphical object display icon 530, the instructions stored in the memory 120 may cause the electronic device 100 to display the graphical object 520 on a deformable object (e.g., a person 512) again and edit the first image 510. Alternatively, upon receiving a user input on the graphical object display icon 530, the instructions stored in the memory 120 may cause the electronic device 100 to display the graphical object 520 on the original image 510.

In an embodiment, the image including the changed object and the original image may be stored in the memory 120.

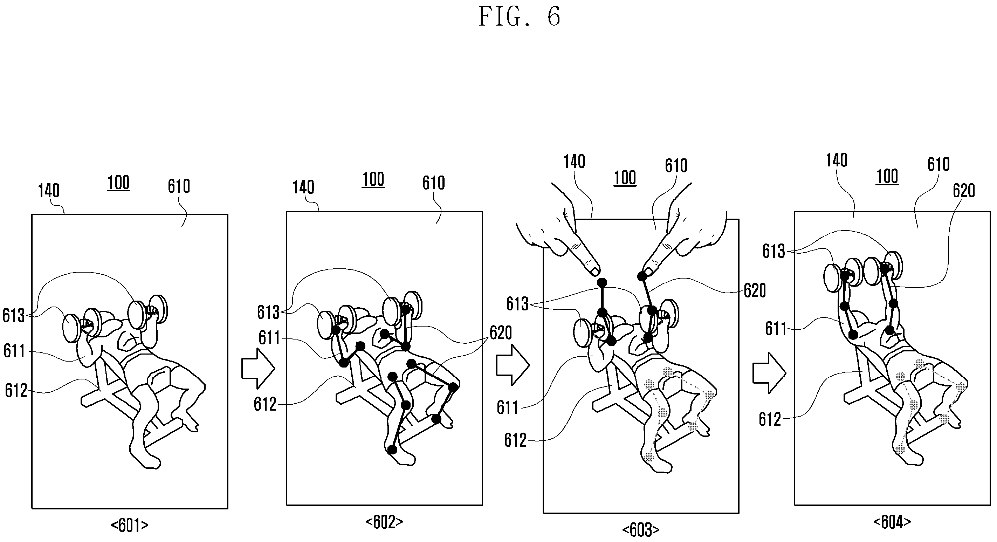

FIG. 6 is a diagram illustrating an image editing method of an electronic device 100 according to an embodiment of the disclosure.

On the screen 601, the instructions stored in the memory 120 may cause the electronic device 100 to display the second image 610 on the display 140. The second image 610 may be displayed on the image editing interface.

For example, the second image 610 may include at least one object 611, 612, and 613. The second image 610 may include a person 611, a bench 612, and dumbbells 613 as objects.

On the screen 601, the instructions stored in the memory 120 may cause the electronic device 100 to recognize and classify at least one object 611, 612, and 613 through segmentation in the second image 610.

On the screen 601, the instructions stored in the memory 120 may cause the electronic device 100 to identify a deformable object 611 and interactive objects 612 and 613 from among at least one object 611, 612, and 613 detected in the second image 610.

For example, the deformable object (e.g., a person 611) may include at least one of a movable object, an object having a changeable size, and an object having a deformable joint on the second image 610.

For example, the interactive objects (e.g., the bench 612 and the dumbbells 613) may include objects capable of interacting with the deformable object (e.g., a person 611). The interactive objects (e.g., the bench 612 and the dumbbells 613) may include a deformable object. The interactive objects (e.g., the bench 612 and the dumbbells 613) may include an object which is a target of a state change when the state of the deformable object is changed. For example, if the deformable object is a person 611, the person 611 may change from a state in which the person 611 lies on a bench 612 to a state in which the person 611 and pulls the dumbbells 613 and then pushes the dumbbells 613. The subject of the state change may be the person 611, and the target of the state change may be the bench 612 or dumbbells 613. The deformable object (e.g., the person 611) may include the subject of the state change, and the interactive objects (e.g., the bench 612 and dumbbells 613) may include the target of the state change.

On the screen 602, the instructions stored in the memory 120 may cause the electronic device 100 to display a graphical object 620 as an overlay on the deformable object (e.g., a person 611) on the display 140.

On the screen 602, the instructions stored in the memory 120 may cause the electronic device 100 to, upon identifying a deformable object (e.g., a person 611), automatically a graphical object 620 as an overlay thereon on the display 140.

However, this is not limitative, and on the screen 602, the instructions stored in the memory 120 may cause the electronic device 100 to receive a drawing input and draw a graphical object 620 on the deformable object (e.g., a person 611) and display the same.

On the screen 603, the instructions stored in the memory 120 may cause the electronic device 100 to receive a user input regarding the graphical object 620.

On the screen 603, the instructions stored in the memory 120 may cause the electronic device 100 to change the shape of the graphical object 620 according to a user input.

On the screen 603, the instructions stored in the memory 120 may cause the electronic device 100 to move a link interface and/or a joint interface included in the graphical object 620. For example, the user input may include a drag input.

On the screen 603, the instructions stored in the memory 120 may cause the electronic device 100 to highlight skeletons moved according to the user's selection among graphical objects 620 and to display the remaining skeletons semi-transparently.

For example, if only the skeleton regarding the arm holding dumbbells 613 is moved by a user input, only the skeleton regarding the arm may be highlighted, and the remaining skeletons may be displayed semi-transparently.

On the screen 603, the instructions stored in the memory 120 may cause the electronic device 100 to provide a user interface for controlling a variable position such that, in consideration of the characteristics of the current object (e.g., person 611), the same can move only within a movable region.

On the screen 604, the instructions stored in the memory 120 may cause the electronic device 100 to generate an image including an object (e.g., a person 611) changed based on the movement of the graphical object 620.

On the screen 604, the instructions stored in the memory 120 may cause the electronic device 100 to generate an image by moving objects (e.g., dumbbells 613) together, which are paired or naturally expressed after being deformed only if the same move together with the deformable object 611, among interactive objects (e.g., a bench 612 and dumbbells 613). On the screen 604, the instructions stored in the memory 120 may cause the electronic device 100 to generate an image by moving objects (e.g., dumbbells 613) together, which can interact between objects or are naturally expressed after being deformed only if the same move together with the deformable object 611, among interactive objects (e.g., a bench 612 and dumbbells 613).

In an embodiment, skeleton information (or location or coordinate information) of the changed object (e.g., person 611) may be stored in the memory 120 as meta information. The skeleton information (or location or coordinate information) of the changed object (e.g., person 611) may be stored in a file of a generated image as meta information in the memory 120.

On the screen 604, the instructions stored in the memory 120 may cause the electronic device 100 to extract a prompt and generate an image including an object (e.g., a person 611) changed based on the extracted prompt and/or the movement of the graphical object 520.

For example, an image may be generated to show the object (e.g., a person 611) changed based on the extracted prompt and/or the movement of the graphical object 520 lifting dumbbells 613. The user may input "Generate an image of a person lifting dumbbells" to the prompt. The instructions stored in the memory 120 may cause the electronic device 100 to extract a prompt and to generate an image showing the object (e.g., a person 611) changed based on the extracted prompt and/or the movement of the graphical object 520 lifting dumbbells 613.

In an embodiment, the image including the changed object and the original image may be stored in the memory 120.

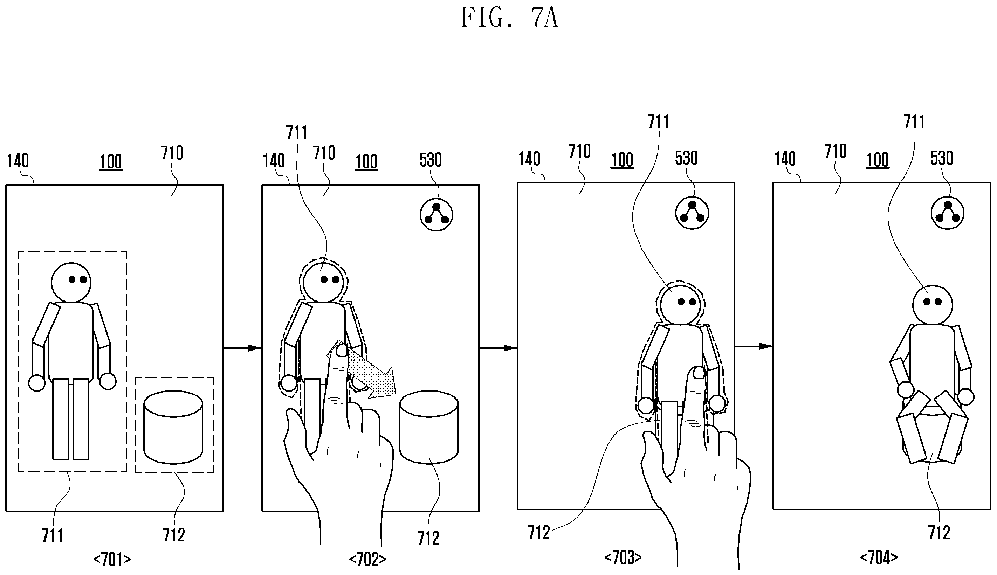

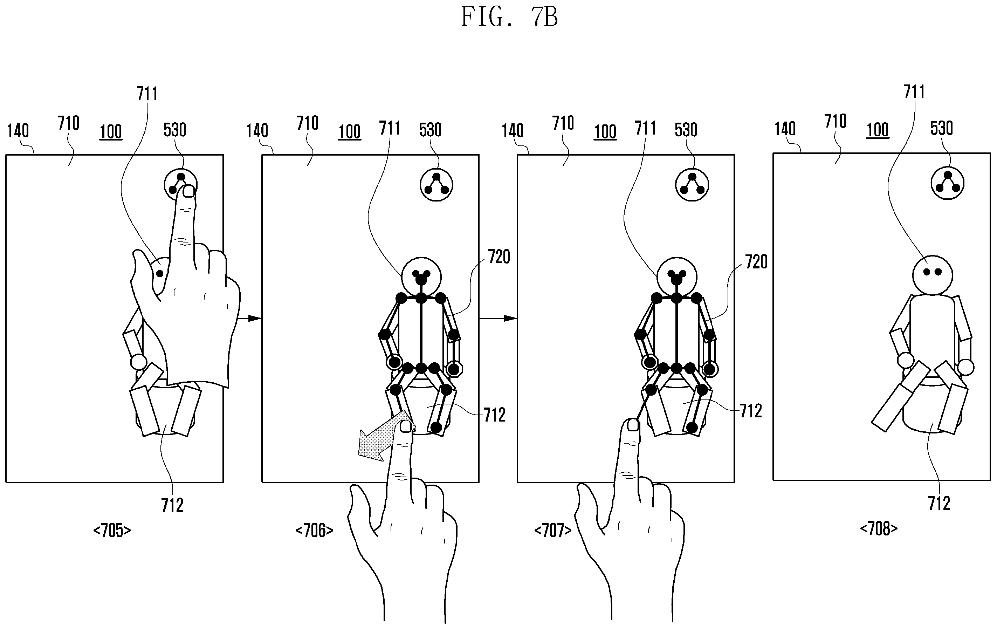

FIG. 7A and FIG. 7B are diagrams illustrating an image editing method of an electronic device 100 according to an embodiment of the disclosure.

On the screen 701, the instructions stored in the memory 120 may cause the electronic device 100 to display the third image 710 on the display 140. The third image 710 may be displayed on the image editing interface.

For example, the third image 710 may include at least one object 711 and 712. The third image 710 may include a person 711 and a chair 712 as objects.

On the screen 701, the instructions stored in the memory 120 may cause the electronic device 100 to recognize and classify at least one object 711 and 712 through segmentation in the third image 710.

On the screen 701, the instructions stored in the memory 120 may cause the electronic device 100 to identify a deformable object 711 and an interactive object 712 among at least one object 711 and 712 detected in the third image 710.

For example, the deformable object (e.g., a person 711) may include at least one of a movable object, an object with a changeable size, an object having a deformable joint, or an object having a deformable joint, on the third image 710.

For example, the interactive object (e.g., a chair 712) may include an object which may interact with a deformable object (e.g., a person 711). The interactive object (e.g., a chair 712) may include an object that is the target of a state change when the state of the deformable object is changed. For example, if the deformable object is a person 711, the person 711 may change from a standing state to a state in which he/she sits on a chair 712. The subject of the state change may be a person 711, and the target of the state change may be a chair 712. The changeable object (e.g., a person 711) may include the subject of the state change, and the interactive object (e.g., a chair 712) may include the target of the state change.

On the screen 702, the instructions stored in the memory 120 may cause the electronic device 100 to display a graphical object display icon 530 on the display 140. Upon receiving a user input on the graphical object display icon 530, the instructions stored in the memory 120 may cause the electronic device 100 to display a graphical object 520 as an overlay on a deformable object (e.g., a person 711) on the display 140.

On the screen 702, the instructions stored in the memory 120 may cause the electronic device 100 to infer skeleton information regarding the deformable object (e.g., person 711) and display a notification on the graphical object display icon 530 to indicate that the inference has been completed.

On the screen 703, the instructions stored in the memory 120 may cause the electronic device 100 to move the deformable object (e.g., a person 711) based on a user input.

On the screen 703, the instructions stored in the memory 120 may cause the electronic device 100 to display the moved deformable object (e.g., a person 711) as an overlay on a specific object.

On the screen 703, the instructions stored in the memory 120 may cause the electronic device 100 to move the deformable object (e.g., person 711) to an interactive object 712 and display the same, based on a user input.

On the screen 703, the instructions stored in the memory 120 may cause the electronic device 100 to determine, in case that the deformable object (e.g., a person 711) moves to a specific object based on a user input, whether the specific object can interact with the deformable object (e.g., a person 711). If the user input is a long press or touch input, the instructions stored in the memory 120 may cause the electronic device 100 to determine that a modifiable object (e.g., a person 711) is selected. The deformable object (for example, a person 711) may be moved on the third image 710 in response to a user input (for example, a drag input).

If the specific object is capable of interacting with a deformable object (e.g., a person 711), on the screen 703, the instructions stored in the memory 120 may cause the electronic device 100 to display a user interface (or a visual effect) indicating that the specific object is an interactive object, around an interactive object (e.g., a chair 712).

If the specific object is capable of interacting with a deformable object (e.g., a person 711), on the 704 screen, the instructions stored in the memory 120 may cause the electronic device 100 to generate an image such that, if moved to a deformable object (e.g., a person 711) overlaid on an interactive object (e.g., a chair 712), the operation or shape of the deformable object (e.g., a person 711) is changed to a state in which the same can be deformed according to the interactive object (e.g., a chair 712).

In an embodiment, the instructions stored in the memory 120 may cause the electronic device 100 to determine the type of interaction between a deformable object (e.g., a person 711) and an interactive object (e.g., a chair 712).

For example, if a deformable object (e.g., a person 711) in a standing state is displayed as an overlay on an interactive object (e.g., a chair 712), the instructions stored in the memory 120 may cause the electronic device 100 to generate an image by changing the operation or shape of the deformable object (e.g., a person 711) such that the deformable object (e.g., the person 711) interacts with the interactive object (e.g., the chair 712) (e.g., sits thereon).

For example, if a deformable object (e.g., a person 711) in a standing state is displayed as an overlay on an interactive object (e.g., a chair 712), the instructions stored in the memory 120 may cause the electronic device 100 to determine a type or operation in which the deformable object (e.g., the person 711) and the interactive object (e.g., the chair 712) can interact with each other. The type or operation in which interaction is possible include, for example, a type or operation in which the same sits on the interactive object (e.g., a chair 712).

On the screen 705, the instructions stored in the memory 120 may cause the electronic device 100 to receive a user input on the graphical object display icon 530.

Upon receiving a user input on the graphical object display icon 530, on the screen 706, the instructions stored in the memory 120 may cause the electronic device 100 to display a graphical object 720 as an overlay on a deformable object (e.g., a person 711) on the display 140.

On the screen 706, the instructions stored in the memory 120 may cause the electronic device 100 to receive a user input regarding the graphical object 720.

On the screen 707, the instructions stored in the memory 120 may cause the electronic device 100 to change the shape of the graphical object 720 according to a user input.

On the screen 707, the instructions stored in the memory 120 may cause the electronic device 100 to move a link interface and/or a joint interface included in the graphical object 720. For example, the user input may include a drag input. The instructions stored in the memory 120, when executed by the processor 110, may cause the electronic device 100 to display the link interface and/or the joint interface moved according to the user input on the display 140.

On the screen 707, the instructions stored in the memory 120 may cause the electronic device 100 to provide a user interface for controlling a variable position such that, in consideration of the characteristics of the current object (e.g., person 711), the same can move only within a movable region.

On the screen 707, the instructions stored in the memory 120 may cause the electronic device 100 to provide one or more candidate results reflecting various kinds of depth information, based on a link interface changed by a user input, and may confirm the link interface change according to the user's selection.

For example, a foot-shaped link interface of the graphical object 720 may be moved in response to a user input, and may change from a bent state to an unfolded state.

On the screen 708, the instructions stored in the memory 120 may cause the electronic device 100 to generate an image including an object (e.g., a person 711) changed based on the movement of the graphical object 720.

In an embodiment, skeleton information (or location or coordinate information) of the changed object (e.g., person 711) may be stored in the memory 120 as meta information.

On the screen 708, the instructions stored in the memory 120 may cause the electronic device 100 to extract a prompt and generate an image including an object (e.g., a person 711) changed based on the extracted prompt and/or the movement of the graphical object 720.

For example, the instructions stored in the memory 120 may cause the electronic device 100 to generate an image showing an object (e.g., a person 711) changed based on the extracted prompt and/or the movement of the graphical object 720 sitting on a chair 712 with one leg stretched. The user may input "Please generate an image of a person sitting on a chair with one leg (or right leg) stretched" to the prompt. The instructions stored in the memory 120 may cause the electronic device 100 to extract a prompt and generate an image including an object (e.g., a person 711) changed based on the extracted prompt and/or the movement of the graphical object 720 sitting on a chair 712 with the right leg stretched.

In an embodiment, in case that the electronic device 100 generates an image based on both the extracted prompt and the movement of the graphical object 520, rather than editing an image by inputting only one of the extracted prompt or the movement of the graphical object 520, the user's intent may be accurately reflected in image editing.

On the screen 708, the instructions stored in the memory 120 may cause the electronic device 100 to display a graphical object display icon 530 on a generated image or the third image 710 having a changed object, on the display 140. Upon receiving a user input on the graphical object display icon 530, the instructions stored in the memory 120 may cause the electronic device 100 to display the graphical object 720 again on the deformable object (e.g., person 711) and edit the third image 710. Alternatively, upon receiving a user input on the graphical object display icon 530, the instructions stored in the memory 120 may cause the electronic device 100 to display the graphical object 720 on the original image 710.

In an embodiment, the image including the changed object and the original image may be stored in the memory 120.

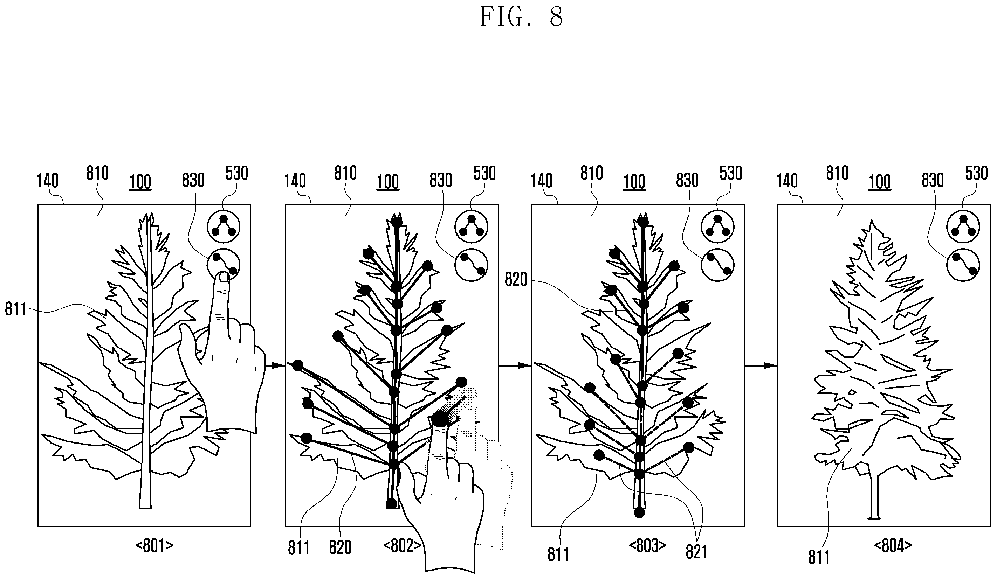

FIG. 8 is a diagram illustrating an image editing method of an electronic device 100 according to an embodiment of the disclosure.

On the screen 801, the instructions stored in the memory 120 may cause the electronic device 100 to display a fourth image 810 on the display 140. The fourth image 810 may be displayed on the image editing interface.

For example, the fourth image 810 may include at least one object 811. The fourth image 810 may include a tree 811 as an object.

On the 801 screen, the instructions stored in the memory 120 may cause the electronic device 100 to recognize and classify at least one object 811 through segmentation in the fourth image 810.

On the screen 801, the instructions stored in the memory 120 may cause the electronic device 100 to identify a deformable object and/or an interactive object among at least one object 811 detected in the fourth image 810.

On the screen 801, the instructions stored in the memory 120 may cause the electronic device 100 to recognize the tree 811 in the fourth image 810 as a deformable object, but to infer skeleton information of the deformable object.

On the screen 801, the instructions stored in the memory 120 may cause the electronic device 100 to display a notification on the graphical object display icon 530 to indicate that the skeleton inference has been completed. For example, the notification indicating that inference has been completed may include an operation of highlighting the graphical object display icon 530.

However, this is not limitative, and on the screen 801, the instructions stored in the memory 120 may cause the electronic device 100 to display the graphical object generation icon 830 on the display 140 upon determining that only a part of the skeleton information of the deformable object is inferred, or the skeleton information needs to be generated by the user.

Upon receiving a user input with regard to the graphical object generation icon 830, on the screen 802, the instructions stored in the memory 120 may cause the electronic device 100 to display skeleton information and/or a graphical object 820 as an overlay on a deformable object (e.g., a tree 811), based on a user input. The user input may be a drawing input.

On the screen 802, the instructions stored in the memory 120 may cause the electronic device 100 to receive a user input regarding the graphical object 820.

On the screen 803, the instructions stored in the memory 120 may cause the electronic device 100 to change the shape of the graphical object 820 according to the user input.

On the screen 803, the instructions stored in the memory 120 may cause the electronic device 100 to move a link interface and/or a joint interface included in the graphical object 820. For example, the user input may include a drag input. The instructions stored in the memory 120, when executed by the processor 110, may cause the electronic device 100 to display the link interface and/or joint interface moved according to the user input on the display 140.

On the screen 803, the instructions stored in the memory 120 may cause the electronic device 100 to provide a user interface for controlling a variable position such that, in consideration of the characteristics of the current object (e.g., tree 811), the same can move only within a movable region.

On the screen 804, the instructions stored in the memory 120 may cause the electronic device 100 to generate an image including an object (e.g., a tree 811) changed based on the movement of the graphical object 820.

In an embodiment, skeleton information (or location or coordinate information) of the changed object (e.g., tree 811) may be stored in the memory 120 as meta information.

On the screen 804, the instructions stored in the memory 120 may cause the electronic device 100 to extract a prompt and generate an image including an object (e.g., a tree 811) changed based on the extracted prompt and/or the movement of the graphical object 520.

On the screen 804, the instructions stored in the memory 120 may cause the electronic device 100 to display a graphical object display icon 530 on a generated image or the fourth 810 having a changed object, on the display 140. Upon receiving a user input on the graphical object display icon 530 or the graphical object icon 830, the instructions stored in the memory 120 may cause the electronic device 100 to display the graphical object 520 on a deformable object (e.g., a tree 811) again and edit the fourth image 810. Alternatively, upon receiving a user input on the graphical object display icon 530 or the graphical object icon 830, the instructions stored in the memory 120 may cause the electronic device 100 to display the graphical object 820 on the original image8510. In an embodiment, the image including the changed object and the original image may be stored in the memory 120.

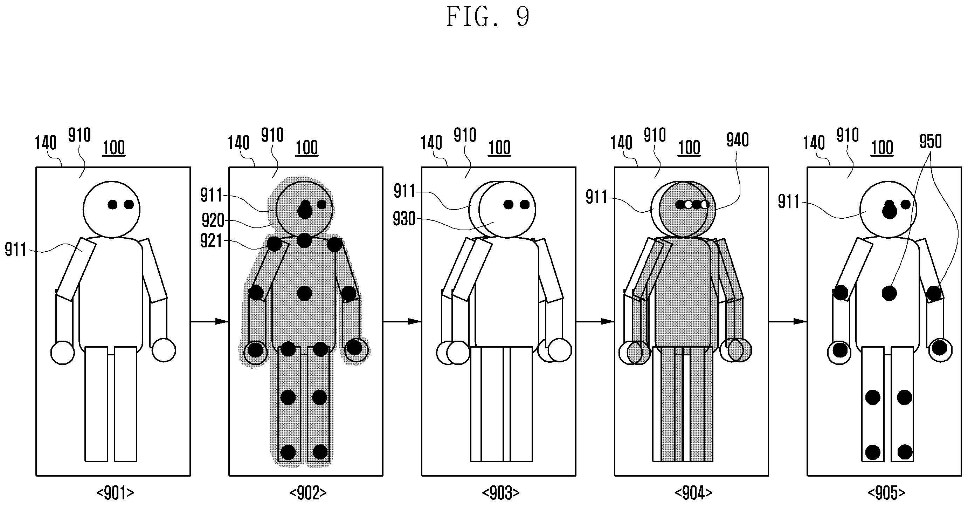

FIG. 9 is a diagram illustrating an image editing method of an electronic device 100 according to an embodiment of the disclosure.

On the screen 901, the instructions stored in the memory 120 may cause the electronic device 100 to display a fifth image 910 on the display 140. The fifth image 910 may be displayed on the image editing interface.

For example, the fifth image 910 may include at least one object 911. The fifth image 910 may include a person 911 as an object.

On the screen 901, the instructions stored in the memory 120 may cause the electronic device 100 to recognize and classify at least one object 911 through segmentation in the fifth image 910.

On the screen 901, the instructions stored in the memory 120 may cause the electronic device 100 to identify a deformable object and/or an interactive object among at least one object 911 detected in the fifth image 910.

On the screen 902, the instructions stored in the memory 120 may cause the electronic device 100 to display a first graphical object 920 as an overlay on a modifiable object (e.g., a person 911) on the display 140.

In an embodiment, the first graphical object 910 may include a shape having an area larger by a specific area than that of the deformable object (e.g., person 911) and a deformable joint 921.

On the screen 903, the instructions stored in the memory 120 may cause the electronic device 100 to display a second graphical object 930 as an overlay on a deformable object (e.g., a person 911) on the display 140.

In an embodiment, the second graphical object 930 may be displayed as an opaque overlay on a shape-changeable object (e.g., person 911) with the same area as that of the deformable object (e.g., person 911).

On the screen 904, the instructions stored in the memory 120 may cause the electronic device 100 to display a third graphical object 940 as a semi-transparent overlay on the deformable object (e.g., a person 911) on the display 140.

In an embodiment, the third graphical object 940 may be displayed as a semi-transparent or transparent overlay on a shape-changeable object (e.g., person 911) with the same area as that of the deformable object (e.g., person 911). The third graphical object 940 may include a transparent or semi-transparent image, and the second graphical object 930 may include an opaque image.

On the screen 905, the instructions stored in the memory 120 may cause the electronic device 100 to display a fourth graphical object 950 as an overlay on the deformable object (e.g., person 911) on the display 140.

In an embodiment, the fourth graphical object 950 may include a deformable joint 950 in the deformable object (e.g., a person 911).

In an embodiment, an electronic device 100 may include a display 140, a memory 120 configured to store instructions, and a processor 140. The instructions, when executed by the processor 110, may cause the electronic device 100 to: display an image including at least one object through the display 140; generate skeleton information at least partially based on a determination that the at least one object corresponds to a deformable object; display, through the display 140, a graphical object corresponding to the skeleton information in the at least one object on the image; at least partially based on a first user input, display a graphical object modified such that at least a part of the graphical object is changed, through the display 140; generate a prompt, based on the modified graphical object and at least a part of the image, and generate an artificial intelligence (AI) image based on the prompt by using an artificial intelligence model.

In an embodiment, the instructions, when executed by the processor 110, may cause the electronic device 100 to: identify an object capable of interacting with the deformable object, as at least a part of an operation of generating the skeleton information; and perform the prompt generation, based on the modified graphical object, the at least one object, and at least a part of the image.

In an embodiment, the instructions, when executed by the processor 110, may cause the electronic device 100 to: receive a second user input for moving the at least one object, before performing generation of the prompt, and in response to the second user input, change the position of the graphical object on the image.

In an embodiment, the instructions, when executed by the processor 110, may cause the electronic device 100 to: at least partially based on the changed position of the graphical object, identify, through scene analysis, a different object capable of interacting with the deformable object; and perform the prompt generation, based on the modified graphical object, the different object, and at least a part of the image.

In an embodiment, the instructions, when executed by the processor 110, may cause the electronic device 100 to generate a graphical object in the at least one object included in the image, based on a third user input.

In an embodiment, the instructions, when executed by the processor 110, may cause the electronic device 100 to generate the skeleton information based on a drawing input, as at least a part of an operation of generating the skeleton information.

In an embodiment, the graphical object may include multiple link interfaces and at least one joint interface connecting the link interfaces.

In an embodiment, the instructions, when executed by the processor 110, may cause the electronic device 100 to: change the angle between the link interfaces according to the first user input.

In an embodiment, the instructions, when executed by the processor 110, may cause the electronic device 100 to change the length of one of the link interfaces according to a fourth user input.

In an embodiment, the instructions, when executed by the processor 110, may cause the electronic device 100 to generate the AI image by performing re-lighting.

In an embodiment, a method for editing an image by an electronic device 100 may include : an operation of displaying an image including at least one object through a display 140; an operation of generating skeleton information at least partially based on a determination that the at least one object corresponds to a deformable object; an operation of displaying, through the display 140, a graphical object corresponding to the skeleton information in the at least one object on the image; an operation of, at least partially based on a first user input, displaying a graphical object modified such that at least a part of the graphical object is changed, through the display 140; an operation of generating a prompt, based on the modified graphical object and at least a part of the image, and an operation of generating an artificial intelligence (AI) image based on the prompt by using an artificial intelligence model.

In an embodiment, the method for editing an image by an electronic device 100 may include an operation of identifying an object capable of interacting with the deformable object, as at least a part of the operation of generating skeleton information; and an operation of performing the prompt generation, based on the modified graphical object, the at least one object, and at least a part of the image.

In an embodiment, the method for editing an image by an electronic device 100 may include an operation of receiving a second user input for moving the at least one object, before performing generation of the prompt; and an operation of, in response to the second user input, changing the position of the graphical object on the image.

In an embodiment, the method for editing an image by an electronic device 100 may include an operation of, at least partially based on the changed position of the graphical object, identifying, through scene analysis, a different object capable of interacting with the deformable object; and an operation of performing the prompt generation, based on the modified graphical object, the different object, and at least a part of the image.

In an embodiment, the method for editing an image by an electronic device 100 may include an operation of generating a graphical object in the at least one object included in the image, based on a third user input.

In an embodiment, the method for editing an image by an electronic device 100 may include an operation of generating the skeleton information based on a drawing input, as at least a part of the operation of generating skeleton information.

In an embodiment, the method for editing an image by an electronic device 100 may include an operation of changing the angle between the link interfaces according to the first user input.

In an embodiment, the method for editing an image by an electronic device 100 may include an operation of changing the length of one of the link interfaces according to a fourth user input.

In an embodiment, the method for editing an image by an electronic device 100 may include an operation of generating the AI image by performing re-lighting.

The electronic device according to various embodiments set forth herein may be one of various types of electronic devices. The electronic devices may include, for example, a portable communication device (e.g., a smartphone), a computer device, a portable multimedia device, a portable medical device, a camera, a wearable device, or a home appliance. The electronic device according to an embodiment of the disclosure is not limited to those described above.

It should be appreciated that various embodiments of the present disclosure and the terms used therein are not intended to limit the technological features set forth herein to particular embodiments and include various changes, equivalents, or replacements for a corresponding embodiment. In relation to the description of the drawings, similar reference numerals may be used for similar or related components. The singular form of a noun corresponding to an item may include one item or a plurality of items unless the context clearly indicates otherwise. As used herein, each of such phrases as "A or B," "at least one of A and B," "at least one of A or B," "A, B, or C," at least one of A, B, and C,"and "at least one of A, B, or C," may include all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". The module may be an integrally configured component or a minimum unit or a portion of the component, which performs one or more functions. For example, according to an embodiment, the module may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 101) of the machine (e.g., the electronic device 110) may invoke at least one of the one or more instructions stored in the storage medium, and execute it. This enables the device to be operated to perform at least one function in response to the at least one invoked instruction. The one or more instructions may include codes generated by a compiler or code capable of being executed by an interpreter. The machine-readable storage medium may be provided in the form of a non-transitory storage medium. Here, the term "non-transitory" merely means that the storage medium is a tangible device and does not contain a signal (e.g., electromagnetic waves), and this term is not intended to distinguish a case where data is permanently stored on the storage medium and a case where data is temporarily stored.

According to an embodiment, methods according to various embodiments of the disclosure may be included and provided in a computer program product. The computer program product may be traded as a product between a seller and a purchaser. The computer program product may be distributed in the form of a machine-readable storage medium (e.g., a compact disc read-only memory (CD-ROM)), or may be directly distributed through an application store (e.g., Play StoreTM) or directly between two user devices (e.g., smartphones), or may be distributed online (e.g., downloaded or uploaded). If distributed online, at least part of the computer program product may be temporarily stored or produced in a machine-readable storage medium such as a manufacturer's server, a server of an application store, or the memory of a relay server.

According to various embodiments, each of the above-described components (e.g., module or program) may include either a single entity or multiple entities, and some of the multiple entities may be placed separately from other components. According to various embodiments, one or more of the components or operations described above may be omitted, or one or more other components or operations may be added. Alternatively, or additionally, multiple components (e.g., modules or programs) may be integrated into a single component. In such a case, the integrated element may perform one or more functions of each of the plurality of elements in the same or similar manner as they are performed by a corresponding one of the plurality of elements before the integration. According to various embodiments, operations performed by a module, a program, or other components may be executed sequentially, in parallel, repetitively, or heuristically, one or more of the operations may be executed in a different order or omitted, or one or more other operations may be added.

## Claims

1. An electronic device comprising:
a display;
a memory configured to store instructions; and
a processor;
wherein the instructions, when executed by the processor, cause the electronic device to:
display an image including at least one object through the display;
generate skeleton information at least partially based on a determination that the at least one object corresponds to a deformable object;
display, through the display, a graphical object corresponding to the skeleton information in the at least one object on the image;
at least partially based on a first user input, display a graphical object modified such that at least a part of the graphical object is changed, through the display;
generate a prompt, based on the modified graphical object and at least a part of the image, and
generate an artificial intelligence (AI) image based on the prompt by using an artificial intelligence model.

2. The electronic device of claim 1, wherein the instructions, when executed by the processor, cause the electronic device to:
identify an object capable of interacting with the deformable object, as at least a part of an operation of generating the skeleton information; and
perform the prompt generation, based on the modified graphical object, the at least one object, and at least a part of the image.

3. The electronic device of claim 2, wherein the instructions, when executed by the processor, cause the electronic device to:
receive a second user input for moving the at least one object, before performing generation of the prompt;
in response to the second user input, change the position of the graphical object on the image;
at least partially based on the changed position of the graphical object, identify, through scene analysis, a different object capable of interacting with the deformable object; and
perform the prompt generation, based on the modified graphical object, the different object, and at least a part of the image.

4. The electronic device of claim 1, wherein the instructions, when executed by the processor, cause the electronic device to generate a graphical object in the at least one object included in the image, based on a third user input.

5. The electronic device of claim 1, wherein the instructions, when executed by the processor, cause the electronic device to generate the skeleton information based on a drawing input, as at least a part of an operation of generating the skeleton information.

6. The electronic device of claim 1, wherein the graphical object includes multiple link interfaces and at least one joint interface connecting the link interfaces.

7. The electronic device of claim 6, wherein the instructions, when executed by the processor, cause the electronic device to:
change the angle between the link interfaces according to the first user input; and
change the length of one of the link interfaces according to a fourth user input.

8. The electronic device of claim 1, wherein the instructions, when executed by the processor, cause the electronic device to generate the AI image by performing re-lighting.

9. A method for editing an image by an electronic device, the method comprising:
displaying an image including at least one object through a display;
generating skeleton information at least partially based on a determination that the at least one object corresponds to a deformable object;
displaying, through the display, a graphical object corresponding to the skeleton information in the at least one object on the image;
at least partially based on a first user input, displaying a graphical object modified such that at least a part of the graphical object is changed, through the display;
generating a prompt, based on the modified graphical object and at least a part of the image, and
generating an artificial intelligence (AI) image based on the prompt by using an artificial intelligence model.

10. The method of claim 9, further comprising:
identifying an object capable of interacting with the deformable object, as at least a part of the generating of skeleton information; and
performing the prompt generation, based on the modified graphical object, the at least one object, and at least a part of the image.

11. The method of claim 10, further comprising:
receiving a second user input for moving the at least one object, before performing generation of the prompt;
in response to the second user input, changing the position of the graphical object on the image;
at least partially based on the changed position of the graphical object, identifying, through scene analysis, a different object capable of interacting with the deformable object; and
performing the prompt generation, based on the modified graphical object, the different object, and at least a part of the image.

12. The method of claim 9, further comprising generating a graphical object in the at least one object included in the image, based on a third user input.

13. The method of claim 9, further comprising generating the skeleton information based on a drawing input, as at least a part of the generating of skeleton information.

14. The method of claim 9, wherein the graphical object includes multiple link interfaces and at least one joint interface connecting the link interfaces, and
wherein the method further comprises:
changing the angle between the link interfaces according to the first user input; and
changing the length of one of the link interfaces according to a fourth user input.

15. The method of claim 9, further comprising generating the AI image by performing re-lighting.
